# EUROPÄISCHE PATENTANMELDUNG

(11) **EP 0 841 158 A1**
(43) Veröffentlichungstag der Anmeldung: **13.05.1998**
(21) Anmeldenummer: 96118112.0
(22) Anmeldetag: 12.11.1996
(51) Int. Cl.: B32B 21/00

(54) **Flächenhaftes witterungsbeständiges Bauelement**

(71) Anmelder: WERZALIT AG + CO., D-71720 Oberstenfeld (DE)
(72) Erfinder: Traumüller, Otfried, D-71720 Oberstenfeld (DE)
(74) Vertreter: Bögl, Wolfgang, Dipl.-Ing.

(57) **Zusammenfassung**

Die Erfindung betrifft ein flächenhaftes Bauelement für Außenanwendungen , wie Fenster , Fensterbänke oder Balkonverkleidungen . Es besteht aus einem Kern und einer Hülle .

Gemäß der Erfindung besteht der Kern aus Furnierlagenholz und wenigstens die äußere Oberfläche ist mit einem Lackpreßfilm beschichtet .

## Beschreibung

Die Erfindung betrifft ein flächenhaftes witterungsbeständiges Bauelement für Außenanwendungen, welches aus einem Kern und einer Hülle besteht.Derartige Bauelemente, wie Fenster, Fensterbänke, Balkonverkleidungen und dgl. werden auf dem Bausektor ständig in sehr großer Menge benötigt. Die der Witterung ausgesetzten Bauelemente müssen derart ausgebildet sein, daß ihre in der Regel dekorativ ausgebildete Oberfläche der Verwitterung widersteht.

Es ist daher bekannt, derartige Bauelemente -wie Fensteraus Tropenhölzern herzustellen und zur Erhöhung ihrer Witterungsbeständigkeit zu imprägnieren. Die Verwendung von Tropenhölzern ist jedoch zunehmend unerwünscht, weil die Tropenwälder wegen des Klimaschutzes erhalten werden sollen.

Es sind daher derartige Bauelemente aus Aluminium oder Kunststoff hergestellt worden. Bauelelemente aus diesen Werkstoffen sind jedoch von Haus aus auch nicht ausreichend widerstandsfähig gegen Verwitterung und müssen daher ebenfalls mit einer Oberflächenschutzschicht versehen werden. Bei den Bauelementen aus Aluminium kommt noch hinzu, daß sie schlechte Wärmeisolationseigenschaften besitzen und bei den Bauelementen aus Kunststoff, welche überwiegend aus PVC bestehen, treten die Schwierigkeiten später bei der Entsorgung nach der Verwendungsdauer auf.

Es sind auch formgepreßte Bauelemente bekannt, bei denen der Kern aus einem Gemisch von lignozellulosehaltigen Teilchen und einem Duroplast einstückig gepreßt und gleichzeitig mit einer Oberflächenschutzschicht versehen sind. Diese Bauelemente sind kostengünstig herstellbar und weisen eine hohe Witterungsbeständigkeit auf. Für eine Reihe von Bauelementen weisen sie jedoch ein zu hohes Gewicht auf.

Das der Erfindung zugrunde liegende technische Problem besteht deshalb darin, ein Bauelement zu schaffen, welches entweder direkt verwendbar ist oder als Oberflächenschutz für ein anderes Bauelement verwendet werden kann. Es soll ohne großen technischen Aufwand herstellbar sein und eine hohe Witterungsbeständigkeit aufweisen. Außerdem soll es mit den üblichen Holzbearbeitungswerkzeugen bearbeitbar sein und am Ende der Verwendungszeit problemlos eine stofflichen oder energetischen Wiederverwertung zugeführt werden können.

Die erfindungsgemäße Lösung dieses technischen Problems besteht darin, daß der Kern aus Furnierlagenholz besteht und wenigstens die äußere Oberfläche mit einem Lackpreßfilm beschichtet ist.

Vorteilhafte Einzelheiten der Erfindung sind in den Ansprüchen 2 bis 5 enthalten, welche nachstehend anhand der in den Figuren 1 bis 3 gezeigten Ausführungsbeispielen erläutert ist. Es zeigen :
- Fig. 1: den Querschnitt durch ein Fensterbank-Profil,
- Fig. 2: den Ausschnitt aus dem Querschnitt eines Fensters, bei dem die Außenfläche des Rahmen-Profils mit einer Verkleidung versehen ist,
- Fig. 3a: die Draufsicht auf die Vorderseite eines Balkonverkleidungsprofils und die
- Figuren 3b-3d: verschiedene Balkonverkleidungsprofile im Längsschnitt.

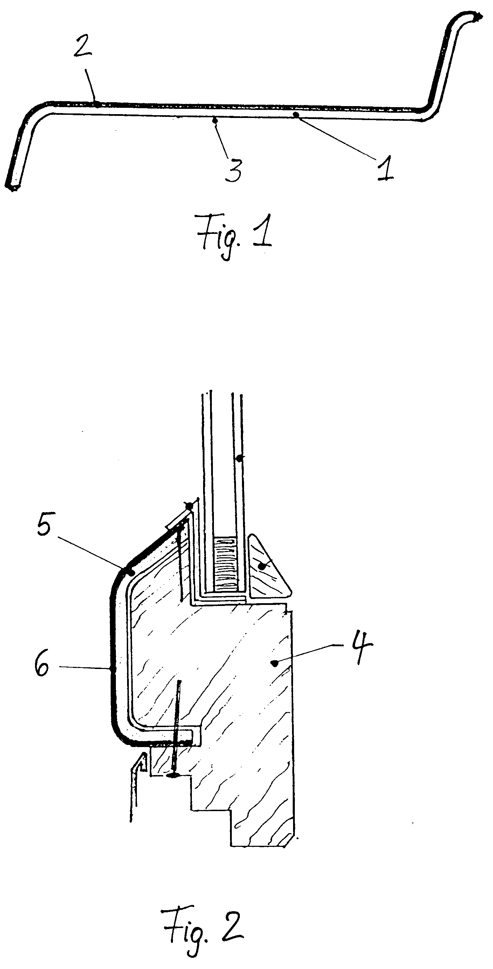

Bei dem in Fig. 1 gezeigten Bauelement handelt es sich um das Profil einer Außenfensterbank. Der Kern 1 besteht aus einem aus meheren Lagen (beispielweise drei bis fünf) hergestellten Furnierlagenholz, welches auf der Außenfläche 2 mit einem Lackpreßfilm versehen ist. Die Innenfläche 3 ist ebenfalls mit einer Rückseitenbeschichtung versehen.Die Herstellung und Ausführungsbeispiele für die Zusammensetzung des Lackpreßfilms sind in den Druckschriften DE-A-42 10 528 und EP-A-....(EP-Anm.Nr 95 114 616.6) beschrieben.

Bei dem in Fig. 2 gezeigten Ausführungsbeispiel ist das aus Holz bestehende Rahmenprofil 4 eines Fensters mit einem Bauelement verkleidet. Dieses Verkleidungs-Bauelement weist im Prinzip den gleichen Aufbau wie das Fensterbank-Profil in Fig. 1 auf, es besteht nämlich aus dem Kern 5 und dem Lackpreßfilm 6.

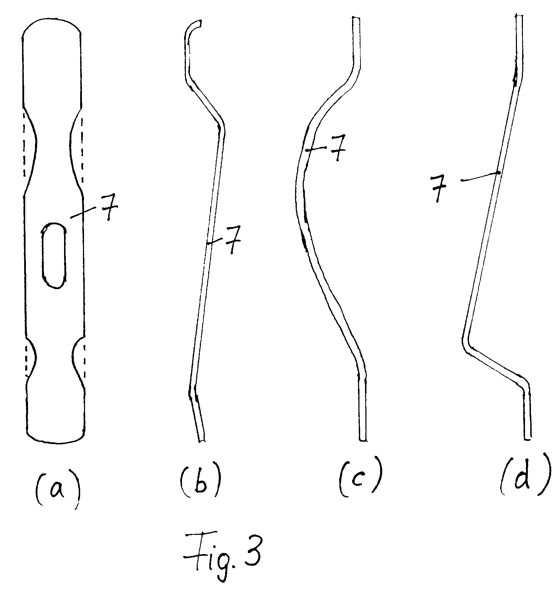

Die in den Figuren 3a bis 3d gezeigten BalkonverkleidungsProfile 7 sollen in gleicher Weise ausgebildet sein, wie die Bauelemente in den Figuren 1 und 2, d.h. bei entsprechender Dimensionierung können die Bauelemente unmittelbar als Balkonverkleidungs-Profile verwendet werden oder sie können als Verkleidung von aus anderen Werkstoffen, wie Vollholz, bestehenden Balkonverkleidungs-Profilen dienen.

## Patentansprüche

1. Flächenhaftes witterungsbeständiges Bauelement für Außenanwendungen, welches aus einem Kern und einer Hülle besteht, dadurch gekennzeichnet, daß der Kern (1,5) aus Furnierlagenholz besteht und wenigstens die äußere Oberfläche mit einem Lackpreßfilm (6) beschichtet ist.

2. Bauelement nach Anspruch 1 ,
dadurch gekennzeichnet, daß die Rückseite mit einer Schutzschicht versehen ist.

3. Bauelement nach den Ansprüchen 1 und 2,
dadurch gekennzeichnet, daß es eben ausgebildet ist.

4. Bauelement nach den Ansprüchen 1 und 4, dadurch gekennzeichnet, daß es profiliert ausgebildet ist.

5. Bauelement nach den Ansprüchen 1 bis 4, dadurch gekennzeichnet,daß die Hülle farbig ausgebildet ist.
